# EUROPÄISCHE PATENTSCHRIFT

(11) **EP 3 801 793 B1**
(45) Veröffentlichungstag und Bekanntmachung des Hinweises auf die Patenterteilung: **27.10.2021**
(21) Anmeldenummer: 18731036.2
(22) Anmeldetag: 08.06.2018
(51) Int. Cl.: A63F 13/24, A63F 13/42

(54) **GAMEPAD**
GAMEPAD
MANETTE DE JEU

(43) Veröffentlichungstag der Anmeldung: 14.04.2021
(73) Patentinhaber: Snakebyte Technologies, Ltd., Kowloon, Hong Kong (HK)
(72) Erfinder: KUEPPER, Marc, Kwun Tong, Kowloon (CN)
(74) Vertreter: Haverkamp, Jens
(86) Internationale Anmeldenummer: PCT/EP2018/065135
(87) Internationale Veröffentlichungsnummer: WO 2019/233594

(56) Entgegenhaltungen:
- WO-A1-2014/187923
- GB-A- 2 210 145
- US-A- 5 624 117
- US-A1- 2017 001 109

## Beschreibung

Die Erfindung betrifft eine Bedienkonsole mit einer Vorderseite und einer Rückseite, an welcher Vorderseite der Bedienkonsole mehrere manuell betätigbare Bedienelemente angeordnet sind, welche Bedienkonsole zumindest ein bezüglich seiner Funktionalität einrichtbares Zusatzbedienelement sowie Mittel zum Zuweisen einer einem Bedienelement zugeordneten Funktionalität auf ein Zusatzbedienelement zum Zuordnen umfasst.

Bedienkonsolen werden als Eingabegeräte zum Spielen von Computerspielen benötigt. Computerspiele werden zunehmend komplexer, sodass auch die benötigten Bedienkonsolen eine Mehrzahl an Bedienelementen aufweisen, um die benötigten unterschiedlichen Funktionen einer Spielfigur, bei der es sich um eine Figur, ein Gerät oder dergleichen handeln kann, in einem Spiel betätigen zu können. Moderne Bedienkonsolen sind ergonomisch zum Halten in den beiden Händen ausgelegt und verfügen typischerweise über zwei voneinander beabstandete Griffansätze, die mitunter von der Bedienerseite wegweisend zueinander etwas geneigt sind. Auf der Vorderseite der Bedienkonsole, die aus Blickrichtung eines Benutzers die Oberseite derselben darstellt, befinden sich die Bedienelemente. Typischerweise verfügt eine solche Bedienkonsole über zwei Joysticks, die so angeordnet sind, dass der eine Joystick mit Fingern der einen Hand und der andere Joystick mit Fingern der anderen Hand bedient werden kann. Ferner verfügt eine solche Bedienkonsole über Tastschalter, die auch als Einfach- oder Kreuzwippe ausgeführt sein können. Mitunter verfügt eine solche Bedienkonsole ebenfalls über ein Display, auf dem Informationen zu dem Spiel und/oder der daran beteiligten Personen für den Benutzer der Bedienkonsole angezeigt werden können.

Bei vielen Computerspielen ist ein sehr exaktes Manövrieren der Spielfigur erforderlich. Das Navigieren erfolgt über den oder die Joysticks, die typischerweise mit dem Daumen bedient werden, auch um Drehbewegungen und Pushbetätigungen ausüben zu können. Mit den Zeigefingern werden an einer vorderen Seitenwand der Bedienkonsole vorhandene Bedienelemente betätigt. Die weiteren, auf der Vorderseite der Bedienkonsole befindlichen Bedienelemente, typischerweise Taster, können nur betätigt werden, wenn der Daumen von dem Joystick abgenommen wird. Mit einem der beiden Joysticks wird typischerweise die Spielfigur manövriert. Mit dem anderen Joystick wird die Kameraposition beeinflusst. Das Entfernen des Daumens von dem Joystick zum Betätigen eines der weiteren Bedienelemente kann daher eine Beeinträchtigung in der Navigation der Spielfigur bzw. eine Beeinträchtigung in der tatsächlich gewünschten Kameraführung zur Folge haben. Aus diesem Grunde sind Bedienkonsolen entwickelt worden, die auf ihrer Rückseite zwei oder mehr Zusatzbedienelemente aufweisen. Diese Zusatzbedienelemente sind bezüglich der von diesem Bedienelement auszuübenden Funktionalität einrichtbar, und zwar mit der Funktionalität eines der auf der Vorderseite befindlichen Bedienelementes. Auf diese Weise kann die Funktionalität eines auf der Vorderseite angeordneten Bedienelementes, beispielsweise eines Tastschalters, einem auf der Rückseite befindlichen Zusatzbedienelement zugeordnet werden, sodass die ansonsten nur auf der Vorderseite auszuübende Funktionalität durch Betätigen des Zusatzbedienelementes mit einem zur Bedienung eines Joysticks nicht benötigten Finger nunmehr an der Rückseite möglich ist. Zum Programmieren dieser Zusatzbedienelemente verfügt eine solche vorbekannte Bedienkonsole über eine Schnittstelle zum Anschließen der Bedienkonsole an eine externe Programmiereinheit, beispielsweise einen Computer, über den die Programmierung des oder der Zusatzbedienelemente vorgenommen wird. Gemäß einer andere vorbekannten Ausgestaltung erfolgt eine solche Programmierung berührungslos, und zwar indem die Bedienkonsole mit einem externen Zusatzgerät in einen Konfigurationsmodus geschaltet und dann die Bedienfunktionalität für das oder die Zusatzbedienelemente eingerichtet wird.

US 2017/001109 A1 offenbart eine Bedienkonsole mit einer Vorderseite und einer Rückseite. An der Vorderseite sind mehrere manuell betätigbare Bedienelemente angeordnet. Ferner verfügt diese Bedienkonsole zumindest über ein bezüglich seiner Funktionalität einrichtbares Zusatzbedienelement und auch über Mittel zum Zuweisen einer einem Bedienelement zugeordneten Funktionalität auf ein Zusatzelement. Zu diesem Zweck verfügt diese Bedienkonsole über Programmiertaster, um die Bedienkonsole bei einer gewünschten Zuweisung einer Funktionalität auf ein Zusatzbedienelement die Bedienkonsole in ein Programmiermodus zu schalten. Ist die Zuweisung vorgenommen, wird der Programmiermodus beendet und die Spielkonsole befindet sich dann wieder in ihren bespielbaren Modus.

WO 2014/187923 A1 offenbart ebenfalls eine Bedienkonsole, an deren Rückseite Zusatzbedienelemente angeordnet sind, die mit einer auf der Vorderseite der Bedienkonsole vorhandenen Bedienfunktionalität eines Bedienelementes belegt werden können. Um dieses vornehmen zu können, muss auch diese Bedienkonsole in einen Programmiermodus geschaltet werden.

GB 2,210,145 A1 offenbart eine Bedienkonsole für Computerspiele. Diese verfügt an ihrer Rückseite über einen Schiebeschalter, um die Bedienkonsole in unterschiedliche Modi schalten zu können. Gleiches gilt für die aus US 5,624,117 A bekannt gewordene Bedienkonsole.

Ausgehend von diesem Stand der Technik liegt der Erfindung die Aufgabe zugrunde, eine Bedienkonsole der eingangs genannten Art dergestalt weiterzubilden, dass eine Programmierung des oder der Zusatzbedienelemente ohne zusätzliche Geräte und bei Bedarf auch während des Spiels ohne erforderliche Spielunterbrechung vorgenommen werden kann.

Gelöst wird diese Aufgabe erfindungsgemäß durch eine eingangs genannte, gattungsgemäße Bedienkonsole, bei der die Bedienkonsole zum Einrichten des Zusatzbedienelementes als Zuordnungsmittel ein Funktionsauswahlmodul mitmehreren vorprogrammierten Bedienelementfunktionalitäten und mit einem manuell betätigbaren Funktionsauswahlschalter zum Auswählen einer vorprogrammierten Bedienelementfunktionalität als durch das Zusatzbedienelement ausführbaren Funktionalität aufweist, wobei der Funktionsauswahlschalter in mehrere Schaltstellungen bringbar ist und jeder Schaltstellung eine unterschiedliche vorprogrammierte Bedienelementfunktionalität zugeordnet ist.

Diese Bedienkonsole für ein elektronisches Spiel (Computerspiel) verfügt über ein Funktionsauswahlmodul, mit dem mehrere vorprogrammierte Bedienfunktionalitäten angewählt werden können, um eine dieser Bedienfunktionalitäten auf das zumindest eine Zusatzbedienelement zu legen. Die Auswahl der auf ein Zusatzbedienelement zu legenden Bedienfunktionalität erfolgt mit einem manuell betätigbarem Funktionsauswahlschalter. Unterschiedlichen Schaltstellungen des Funktionsauswahlschalters sind unterschiedliche vorprogrammierte Bedienfunktionalitäten zugeordnet, sodass über die Schaltstellung des Funktionsauswahlschalters die gewünschte vorprogrammierte Bedienelementfunktionalität dem Zusatzbedienelement zugeordnet werden kann. Da die Bedienelementfunktionalitäten, die auf ein solches Zusatzbedienelement gelegt werden können, vorprogrammiert sind, werden bei dieser Bedienkonsole keine zusätzlichen externen Komponenten oder Geräte benötigt, um dem zumindest einen Zusatzbedienelement eine vorbestimmte bzw. vorprogrammierte Bedienelementfunktionalität zuordnen zu können. Hierzu ist allein ein Verstellen des Funktionsauswahlschalters erforderlich, und zwar durch Verstellen desselben in diejenige Stellung die der gewünschten vorprogrammierten Bedienelementfunktionalität für das Zusatzbedienelement entspricht. Bei dem Funktionsauswahlschalter kann es sich um jedweden, für diese Zwecke geeigneten Schalter handeln, also beispielsweise um einen Drehschalter, einen Schiebeschalter oder dergleichen. Auch besteht die Möglichkeit, den Funktionsauswahlschalter als Tastschalter auszulegen, wobei die Auswahl der gewünschten vorprogrammierten Bedienelementfunktionalität über der Anzahl der Tastbetätigungen in einem vorgegebenen Zeitintervall erfolgen kann.

Typischerweise handelt es sich bei den vorprogrammierten Bedienelementfunktionalitäten des Funktionsauswahlmoduls um solche Funktionalitäten, die auch durch die auf der Vorderseite der Bedienkonsole angeordneten Bedienelemente, insbesondere der durch eine Push-Betätigung zu bedienenden Bedienelemente ausgeübt werden können. Insofern können bei dieser Bedienkonsole in Abhängigkeit von der Anzahl der eingesetzten Zusatzbedienelemente ein oder auch mehrere Funktionalitäten eines oder mehrerer vorderseitiger Bedienelemente dem oder den Zusatzbedienelementen zugeordnet werden. Dabei kann vorgesehen sein, dass die einem Zusatzbedienelement zugeordnete Funktionalität sowohl über eine Betätigung des Zusatzbedienelementes als auch über eine Betätigung des auf der Vorderseite für diese Funktionalität vorgesehenen Bedienelementes möglich ist. Alternativ besteht die Möglichkeit, dass, wenn eine Funktionalität eines auf der Vorderseite der Bedienkonsole angeordneten Bedienelementes einem Zusatzbedienelement zugeordnet ist, diese Funktionalität mit dem auf der Vorderseite angeordneten Bedienelement nicht mehr ausgelöst bzw. betätigt werden kann. In einer weiteren Ausgestaltung ist vorgesehen, dass, wenn die Funktionalität eines von der Vorderseite der Bedienkonsole von dem Bedienelementes auf ein solches Zusatzbedienelement gelegt worden ist, dem auf der Vorderseite befindlichen Bedienelement eine andere Funktionalität zugeteilt wird.

Die Konfigurierung des oder der Zusatzbedienelemente kann spontan durch Betätigen des Funktionsauswahlschalters vorgenommen werden. Hierfür ist es nicht erforderlich, die Bedienkonsole in einen Programmiermodus zu schalten. Eine Änderung der Belegung des oder der Zusatzbedienelemente bezüglich der diesen zugeordneten Funktionalität kann daher auch während eines laufenden Spiels oder in einer kurzen Spielpause vorgenommen werden. Insofern ist eine Einrichtung der Bedienkonsole zum Anpassen derselben an die individuellen Bedienbedürfnisse eines Nutzers und in Abhängigkeit von dem jeweiligen Spiel und auch des Spielverlaufes möglich.

Bei den in dem Funktionsauswahlmodul vorprogrammierten Bedienelementfunktionalitäten kann es sich auch um zumindest eine zusätzliche Bedienelementfunktionalität handeln, die bei Bedarf zugeschaltet und mit einem solchen Zusatzbedienelement ausgelöst werden kann. Als vorprogrammierte Bedienelementfunktionalität kann auch vorgesehen sein, dass, wenn die Bedienfunktionalität eines auf der Vorderseite der Bedienkonsole befindlichen Bedienelementes einem Zusatzbedienelement zugeordnet wird, dem auf der Vorderseite angeordneten Bedienelement dann eine andere Funktionalität zugeordnet wird.

Typischerweise umfasst das Funktionsauswahlmodul auch eine vorprogrammierte Bedienelementfunktionalität als Dummy-Funktionalität, bei der eine Betätigung des Zusatzbedienelementes funktionslos bleibt. Diese Einstellung wird man wählen, wenn die Zusatzbedienelemente nicht benötigt werden oder bei einer Betätigung funktionslos bleiben sollen. In einer anderen Ausgestaltung ist vorgesehen, dass die Bedienkonsole über einen Schalter verfügt, mit dem die Einrichtung des oder der Zusatzbedienelemente ein- bzw. ausgeschaltet werden kann.

In aller Regel wird man eine solche Bedienkonsole mit zumindest zwei derartigen Zusatzbedienelementen auslegen, sodass jedem Zusatzelement ein Funktionsauswahlmodul und ein eigener Funktionsauswahlschalter zugeordnet ist. Eine Auslegung der Bedienkonsole auch mit mehr als zwei Zusatzbedienelementen ist möglich.

Typischerweise wird man die Anzahl der manuell auswählbaren vorprogrammierten Bedienelementfunktionalitäten überschaubar halten, um Fehleinstellungen zu vermeiden.

In einer Ausgestaltung einer solchen Bedienkonsole sind der bzw. die Funktionsauswahlschalter als Schiebeschalter ausgeführt, da diese auch bei mehreren Schaltstellungen nur einen relativ geringen Einbauraum benötigen und die aktuelle Schaltstellung mit einem Finger leicht erspürt werden kann.

Die Funktionsauswahlschalter sind gemäß einer Ausgestaltung auf der Rückseite der Bedienkonsole angeordnet und dort bei Nichtgebrauch durch eine Abdeckung verblendet. Bei dieser Ausgestaltung der Bedienkonsole wird man die Funktionsauswahlschalter vor Spielbeginn bezüglich einer Belegung des oder der Zusatzbedienelemente einrichten. Diese Abdeckung ist lösbar bzw. von der Bedienkonsole entfernbar, um einen Zugang zu dem oder den Funktionsauswahlschaltern bei einer gewünschten Betätigung derselben zu erlauben. Ist eine Änderung der Belegung des oder der Zusatzbedienelemente während des Spiels gewünscht, kann auch bei einer solchen Ausführung der Bedienkonsole während des Spiels die Abdeckung schlichtweg abgenommen bleiben. In einer anderen Ausgestaltung ist vorgesehen, dass die Abdeckung der Bedienkonsole nicht von der Bedienkonsole entfernbar, sondern nach Art eines Schieberollos ausgeführt ist. Dann besteht nicht die Gefahr, dass unter Umständen in der Hektik eines Spieles eine abgenommene Abdeckung verlorengeht.

Bei einer Bedienkonsole mit Griffansätzen befindet sich bei Vorsehen von zwei Zusatzbedienelementen jeweils einer dieser Zusatzbedienelemente an jedem Griffansatz im Bereich seiner zu dem jeweils anderen Griffansatz weisenden Rückseite. An dieser Position ist ein solches Zusatzbedienelement ergonomisch besonders gut erreichbar und betätigbar, selbst wenn das Zusatzbedienelement beispielsweise als Mehrstellungstastschalter, etwa als Schaltwippe ausgeführt ist.

In einer Weiterbildung einer solchen Bedienkonsole ist vorgesehen, dass diese eine Schnittstelle aufweist, um vorprogrammierte Bedienelementfunktionalitäten importieren zu können. Diese können vorhandene vorprogrammiert Bedienelementfunktionalitäten ersetzen oder als zusätzliche vorprogrammierte Bedienelementfunktionalitäten gespeichert werden. Ist eine solche Schnittstelle vorgesehen, können durch den Programmierzugriff mittels eines externen Gerätes auch die in dem oder den Funktionsauswahlmodulen abgelegten vorprogrammierten Bedienelementfunktionalitäten, die dem oder den Zusatzbedienelementen zugeordnet werden können, geändert werden. Auf diese Weise können nutzerseitig die vorprogrammierten Bedienelementfunktionalitäten eingerichtet werden. Die Auswahl derjenigen Bedienelementfunktionalität, die auf ein solches Zusatzbedienelement gelegt wird, erfolgt dann mit dem einem Zusatzbedienelement zugeordneten Funktionsauswahlschalter.

Die Erfindung ist nachfolgend anhand eines Ausführungsbeispiels unter Bezugnahme auf die beigefügten Figuren beschrieben. Es zeigen:
- **Fig. 1:**: eine perspektivische Ansicht einer Bedienkonsole,
- **Fig. 2:**: eine Draufsicht auf die Rückseite der Bedienkonsole der Figur 1 mit einer in Position befindlichen Abdeckung,
- **Fig. 3:**: die Bedienkonsole in der Darstellung gemäß Figur 2 mit abgenommener Abdeckung und
- **Fig. 4:**: ein schematisiertes Blockschaltbild zum Darstellen der Funktionsauswahl zum Belegen eines Zusatzbedienelementes.

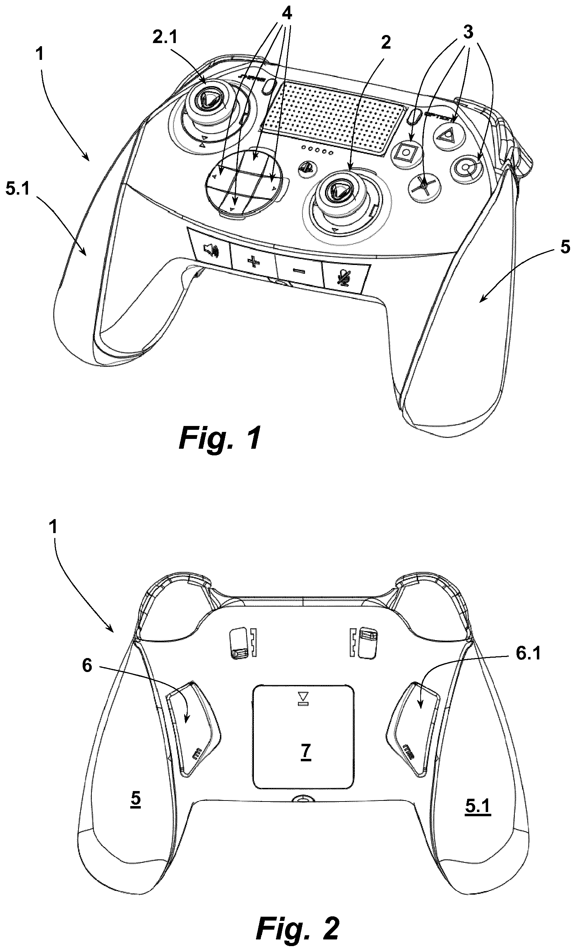

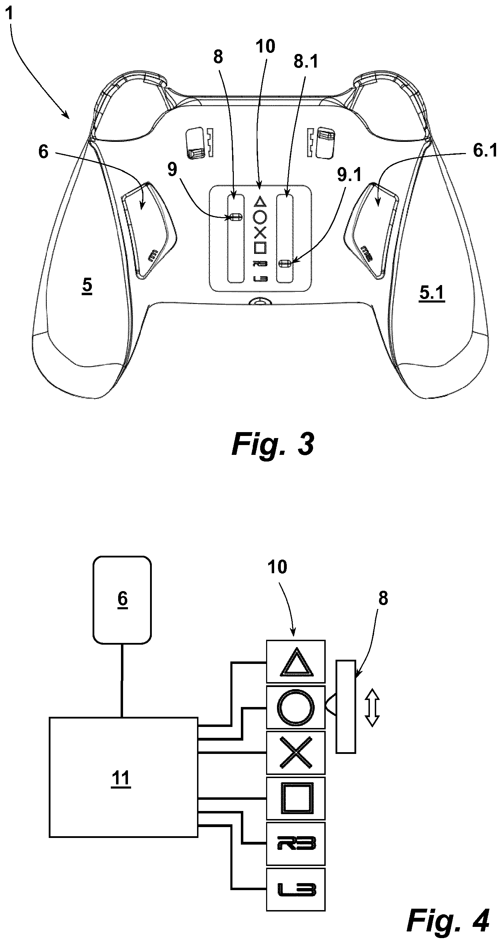

Eine Bedienkonsole 1 trägt an seiner Vorderseite mehrere Bedienelemente. Hierzu gehören zwei Joysticks 2.1 und mehrere Taster (Tastschalter) 3, 4. Die Bedienkonsole 1 ist ergonomisch geformt und verfügt über zwei Griffansätze 5, 5.1, die von der Benutzungsseite wegweisend zueinander geneigt sind. In dem die Griffansätze 5, 5.1 verbindenden Teil des Gehäuses der Bedienkonsole 1 sitzen die vorgenannten Bedienelemente 2, 2.1, 3, 4. An der in Figur 2 gezeigten Rückseite (Unterseite) der Bedienkonsole 1 befinden sich zwei Zusatzbedienelemente 6, 6.1, die als Taster ausgelegt sind. Die Zusatzbedienelemente 6, 6.1 befinden sich in einem gegenüber dem die Griffansätze 5, 5.1 verbindenden Teil der Bedienkonsole 1 erhabenen Abschnitt, sodass die Zusatzbedienelemente 6, 6.1 zueinander weisend angeordnet sind. Diese Position ist ergonomisch günstig, damit diese mit dem Mittelfinger, dem Ringfinger oder dem kleinen Finger oder auch mehreren davon erreicht und im Falle einer gewünschten Funktionsauslösung betätigt werden können. Hierzu braucht weder der Daumen vom Joystick noch der Zeigefinger von den von diesem bedienten Bedienelementen entfernt zu werden. Die Funktionalität, die mit einem solchen Zusatzbedienelement 6, 6.1 ausgeübt werden kann, ist benutzerseitig einrichtbar. Zu diesem Zweck verfügt die Bedienkonsole 1 über ein jedem Zusatzbedienelement 6 bzw. 6.1 zugeordnetes Funktionsauswahlmodul 11 mit mehreren vorprogrammierten Bedienelementfunktionalitäten und mit einem manuell betätigbaren Funktionsauswahlschalter 8, 8.1. Die Funktionsauswahlschalter 8, 8.1 befinden sich bei dem dargestellten Ausführungsbeispiel unterhalb einer Abdeckung 7 und sind nach Entfernen der Abdeckung 7 zugänglich. Die Abdeckung 2 ist in gehäuseseitigen Führungsschienen der Bedienkonsole 1 geführt und aus den Führungsschienen herausnehmbar, um die Funktionsauswahlschalter 8, 8.1 zugänglich zu machen. Figur 3 zeigt die Bedienkonsole 1 mit abgenommener Abdeckung 7, wodurch der jedem Zusatzbedienelement 6 bzw. 6.1 zugeordnete Funktionsauswahlschalter 8, 8.1 erkennbar ist. Die Funktionsauswahlschalter 8, 8.1 sind bei diesem Ausführungsbeispiel als Schiebeschalter ausgeführt. Jeder Funktionsauswahlschalter 8, 8.1 verfügt über eine Stellkontur 9, 9.1, die bei dem dargestellten Ausführungsbeispiel als Vertiefung ausgeführt sind. Selbstverständlich können diese auch als Erhöhung und somit als Nocke ausgeführt sein. Die Stellkonturen 9, 9.1 dienen zum Betätigen des jeweiligen Funktionsauswahlschalters 8, 8.1 sowie zum Kennzeichnen der aktuellen Schaltstellung. Die beiden Funktionsauswahlschalter 8, 8.1 sind mit Abstand zueinander angeordnet, wobei der Funktionsauswahlschalter 8 dem Zusatzbedienelement 6 näher ist, während der Funktionsauswahlschalter 8.1 näher an dem Zusatzbedienelement 6.1 angeordnet ist. Hieraus ergibt sich auch die Zuordnung der Funktionsauswahlschalter 8, 8.1 dahingehend, dass der Funktionsauswahlschalter 8 zum Einrichten der Funktionalität des Zusatzbedienelementes 6 und der Funktionsauswahlschalter 8.1 zum Einrichten der gewünschten Funktionalität des Zusatzbedienelementes 6.1 vorgesehen sind. Zwischen den beiden Funktionsauswahlschaltern 8, 8.1 befindet sich eine Schaltstellungskennzeichnung 10. Dabei stellen die geometrischen Figuren diejenigen Symbole dar, die auf den Tastern 3 der Vorderseite der Bedienkonsole 1 verwendet worden sind. Jeder Funktionsauswahlschalter 8, 8.1 kann somit mit einer Funktionalität belegt werden, die der Funktionalität eines der Taster 3 entspricht. Der Funktionsauswahlschalter 8 befindet sich bei der Darstellung der Bedienkonsole 1 in der Figur 3 in einer Stellung, in der das Zusatzbedienelement 6 mit der mit dem Kreis gekennzeichneten Funktionalität des Tasters 3 belegt ist.

Insgesamt stehen bei diesem Ausführungsbeispiel sechs vorprogrammierte Bedienelementfunktionalitäten zur Verfügung. Neben den vier Tastern 3 zugeordneten Bedienelementfunktionalitäten können die Funktionsauswahlschalter 8, 8.1 noch in zwei weitere Funktionalitäten "R3" oder "L3" gebracht werden. Hierbei handelt es sich um die Push-Funktionalität der beiden Joysticks 2, 2.1, wobei die Push-Funktionalität (Tast-Funktionalität) des Joysticks 2 der Funktionalität "R3" und die Push-Funktionalität des Joysticks 2.1 der Funktionalität "L3" entspricht. Der Funktionsauswahlschalter 8.1 befindet sich in der Schaltstellung, bei der das Zusatzbedienelement 6.1 die Funktionalität "R3" ausüben kann.

Die Einrichtbarkeit der Zusatzbedienelemente 6, 6.1 ist schematisiert in Figur 4 gezeigt. Jedem Symbol der Schaltstellungskennzeichnung 10 ist eine Schaltstellung zugeordnet. Der als Schiebeschalter ausgeführte Funktionsauswahlschalter 8 befindet sich in seiner auch in Figur 3 gezeigten Stellung zur Auswahl der Bedienfunktionalität des mit dem Symbol "Kreis" auf der Vorderseite der Bedienkonsole 1 gekennzeichneten Tasters 3. Diese und auch die anderen Schaltstellungen sind typischerweise haptisch durch eine Rastung in der Verschiebebewegung des Funktionsauswahlschalters 8 kenntlich gemacht. Diese Schaltstellungserfassung ist an ein Funktionsauswahlmodul 11 angeschlossen, in dem die sechs möglichen Funktionalitäten als vorprogrammierte Bedienelementfunktionalitäten abgelegt sind. Entsprechend der mit dem Funktionsauswahlschalter 8 getroffenen Schaltstellungsauswahl ist sodann das Zusatzbedienelement 6 mit der ausgewählten Funktionalität belegt, d. h.: Das Zusatzelement 6 löst bei seiner Betätigung die ihm zugeordnete Funktionalität aus. Bei dem Funktionsauswahlmodul 11 kann es sich um ein eigenständiges Modul oder auch um den in der Bedienkonsole 1 ohnehin vorhandenen Controller nebst Programmspeicher handeln. Durchaus möglich ist es auch, ein gemeinsames Funktionsauswahlmodul für die unter Umständen mehreren Zusatzbedienelemente zu nutzen.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten die Erfindung auszuführen, ohne dass dieses im Einzelnen im Rahmen dieser Ausführungen angegeben werden müsste.

### Bezugszeichenliste

- 1: Bedienkonsole
- 2, 2.1: Joystick
- 3: Taster
- 4: Taster
- 5, 5.1: Griffansatz
- 6, 6.1: Zusatzbedienelement
- 7: Abdeckung
- 8, 8.1: Funktionsauswahlschalter
- 9, 9.1: Stellkulisse
- 10: Schaltstellungskennzeichnung
- 11: Funktionsauswahlmodul

## Patentansprüche

1. Bedienkonsole mit einer Vorderseite und einer Rückseite, an welcher Vorderseite der Bedienkonsole mehrere manuell betätigbare Bedienelemente (2, 2.1, 3, 4) angeordnet sind, welche Bedienkonsole (1) zumindest ein bezüglich seiner Funktionalität einrichtbares Zusatzbedienelement (6, 6.1) sowie Mittel zum Zuweisen einer einem Bedienelement (2, 2.1, 3, 4 zugeordneten Funktionalität auf ein Zusatzbedienelement (6, 6.1) zum Zuordnen umfasst, **dadurch gekennzeichnet, dass** die Bedienkonsole (1) zum Einrichten des Zusatzbedienelementes (6, 6.1) als Zuordnungsmittel ein Funktionsauswahlmodul (11) mit mehreren vorprogrammierten Bedienelementfunktionalitäten und mit einem manuell betätigbaren Funktionsauswahlschalter (8, 8.1) zum Auswählen einer der vorprogrammierten Bedienelementfunktionalitäten als die durch das Zusatzbedienelement (6, 6.1) ausführbare Funktionalität aufweist, wobei der Funktionsauswahlschalter (8, 8.1) in mehrere Schaltstellungen bringbar ist und jeder Schaltstellung eine unterschiedliche vorprogrammierte Bedienelementfunktionalität zugeordnet ist.

2. Bedienkonsole nach Anspruch 1, **dadurch gekennzeichnet, dass** eine der vorprogrammierten Bedienelementfunktionalitäten eine Dummy-Funktionalität ist, bei der eine Betätigung des Zusatzbedienelementes (6, 6.1) funktionslos bleibt.

3. Bedienkonsole nach Anspruch 1 oder 2, **dadurch gekennzeichnet, dass** der Funktionsauswahlschalter (8, 8.1) als Schiebeschalter ausgeführt ist.

4. Bedienkonsole nach einem der Ansprüche 1 bis 3, **dadurch gekennzeichnet, dass** der Funktionsauswahlschalter (8, 8.1) an der Rückseite der Bedienkonsole (1) angeordnet ist.

5. Bedienkonsole nach einem der Ansprüche 1 bis 4, **dadurch gekennzeichnet, dass** der Funktionsauswahlschalter (8, 8.1) hinter einer zum Betätigen des Funktionsauswahlschalters (8, 8.1) öffnenbaren Abdeckung (7) sitzt.

6. Bedienkonsole nach Anspruch 5, **dadurch gekennzeichnet, dass** die Abdeckung (7) als in Führungsschienen geführte Schiebeabdeckung ausgeführt ist.

7. Bedienkonsole nach Anspruch 6, **dadurch gekennzeichnet, dass** die Schiebeabdeckung aus ihren Führungsschienen herausschiebbar ist.

8. Bedienkonsole nach einem der Ansprüche 1 bis 7, **dadurch gekennzeichnet, dass** das zumindest eine Zusatzbedienelement (6, 6.1) ein Tastschalter ist.

9. Bedienkonsole nach Anspruch 8, **dadurch gekennzeichnet, dass** der Tastschalter als Mehrstellungstastschalter, etwa als Schaltwippe ausgeführt ist.

10. Bedienkonsole nach einem der Ansprüche 1 bis 9, **dadurch gekennzeichnet, dass** die Bedienkonsole (1) mehrere Zusatzbedienelemente (6, 6.1) aufweist und jedem Zusatzbedienelement (6, 6.1) ein Funktionsauswahlmodul (11) mit einem Funktionsauswahlschalter (8, 8.1) zugeordnet ist.

11. Bedienkonsole nach Anspruch 10, **dadurch gekennzeichnet, dass** die mehreren Funktionsauswahlschalter (8, 8.1) gleich ausgeführt sind.

12. Bedienkonsole nach Anspruch 10 oder 11, **dadurch gekennzeichnet, dass** die Bedienkonsole (1) zwei Griffansätze (5, 5.1) aufweist, deren Rückseite über die Rückseite des die Griffansätze (5, 5.1) verbindenden Teils der Bedienkonsole (1) hervorsteht und dass an jedem Griffansatz (5 bzw. 5.1) im Bereich seiner zu dem jeweils anderen Griffansatz (5 bzw. 5.1) weisenden Rückseite ein Zusatzbedienelement (6, 6.1) angeordnet ist.

13. Bedienkonsole nach Anspruch 12, **dadurch gekennzeichnet, dass** die Funktionsauswahlschalter (8, 8.1) zwischen den Griffansätzen (5, 5.1) mit Abstand zueinander angeordnet sind, sodass jeweils ein Funktionsauswahlschalter (6, 6.1) näher an einem der beiden Griffansätze (5, 5.1) angeordnet ist als der andere.

14. Bedienkonsole nach einem der Ansprüche 1 bis 13, **dadurch gekennzeichnet, dass** zumindest einige der vorprogrammierten Bedienfunktionalitäten des zumindest einen Funktionsauswahlmoduls (11) Bedienfunktionalitäten eines oder mehrerer, an der Vorderseite der Bedienkonsole angeordneter Bedienelemente (3) sind.

15. Bedienkonsole nach einem der Ansprüche 1 bis 14, **dadurch gekennzeichnet, dass** zumindest eines der an der Vorderseite der Bedienkonsole befindlichen Bedienelemente ein Joystick (2, 2.1) oder ein Bedienelement mit einer einem Joystick entsprechenden Funktionalität ist.

16. Bedienkonsole nach einem der Ansprüche 1 bis 15, **dadurch gekennzeichnet, dass** die Bedienkonsole eine Schnittstelle zum Importieren einer Bedienfunktionalität von einem externen Gerät als vorprogrammierte Bedienfunktionalität umfasst, welche importierte Bedienfunktionalität in einem Bedienfunktionalitätenspeicher eines Funktionsauswahlmoduls abgelegt ist.

## Claims

1. Control console having a front side and a rear side, on the front side of the control console multiple manually operated control elements (2, 2.1, 3, 4) are arranged, said control console (1) comprising at least one additional control element (6, 6.1) which is configurable in respect of its functionality, as well as means for allocating a functionality assigned to a control element (2, 2.1, 3, 4) to an additional control element (6, 6.1), **characterised in that** the control console (1), in order to configure the additional control element (6, 6.1) as assignment means, comprises a function selection module (11) with multiple pre-programmed control element functionalities and with a manually actuated function selector switch (8, 8.1) for selecting one of the pre-programmed control element functionalities as the functionality which can be carried out by the additional control element (6, 6.1), wherein the function selector switch (8, 8.1) can be brought into several switch positions, and a different pre-programmed control element functionality is assigned to each switch position.

2. Control console according to claim 1, **characterised in that** one of the pre-programmed control element functionalities is a dummy functionality, which remains without function at an actuation of the additional control element (6, 6.1).

3. Control console according to claim 1 or 2, **characterised in that** the function selector switch (8, 8.1) is configured as a slide switch.

4. Control console according to any one of claims 1 to 3, **characterised in that** the function selector switch (8, 8.1) is arranged on the rear side of the control console (1).

5. Control console according to any one of claims 1 to 4, **characterised in that** the function selector (8, 8.1) is located behind a cover (7), which can be opened in order to actuate the function selector switch (8, 8.1).

6. Control console according to claim 5, **characterised in that** the cover (7) is configured as a sliding cover guided in guide rails.

7. Control console according to claim 6, **characterised in that** the sliding cover can be slid out of the guide rails.

8. Control console according to any one of claims 1 to 7, **characterised in that** the at least one additional control element (6, 6.1) is a momentary-contact switch.

9. Control console according to claim 8, **characterised in that** the momentary-contact switch is configured as a multiple-position contact switch, such as a rocker switch.

10. Control console according to any one of claims 1 to 9, **characterised in that** the control console (1) comprises several additional control elements (6, 6.1), and that a function selection module (11) with a function selector switch (8,8.1) is assigned to each additional control element (6, 6.1).

11. Control console according to claim 10, **characterised in that** the several function selector switches (8, 8.1) are of the same configuration.

12. Control console according to claim 10 or 11, **characterised in that** the control console (1) comprises two handle connectors (5, 5.1), the rear side of which projects over the rear side of the part of the control console (1) connecting the handle connectors (5, 5.1), and that an additional control element (6, 6.1) is arranged at every other handle connector (5 and 5.1 respectively) in the region facing towards the other handle connector (5 and 5.1 respectively) in each case.

13. Control console according to claim 12, **characterised in that** the function selector switches (8, 8.1) are arranged at a distance from one another between the handle connectors (5, 5.1), such that in each case one function selector switch (6, 6.1) is arranged as closer to one of the two handle connectors (5, 5.1) than the other.

14. Control console according to any one of claims 1 to 13, **characterised in that** at least some of the pre-programmed control functionalities of the at least one function selector module (11) are control functionalities of one or more of the control elements (3) arranged on the front side of the control console.

15. Control console according to any one of claims 1 to 14, **characterised in that** at least one of the control elements located on the front side of the control console is a joystick (2, 2.1) or a control element with a functionality corresponding to a joystick.

16. Control console according to any one of claims 1 to 15, **characterised in that** the control console comprises an interface for importing a control functionality from an external device as a pre-programmed control functionality, said imported control functionality being stored in a control functionality memory of a function selection module.

## Revendications

1. Manette de jeu avec une face avant et une face arrière, sur laquelle face avant de la manette de jeu sont disposés plusieurs éléments d'utilisation (2, 2.1, 3, 4) actionnables manuellement, laquelle manette de jeu (1) comprend au moins un élément d'utilisation supplémentaire (6, 6.1) dont les fonctionnalités sont réglables, ainsi que des moyens pour rediriger une fonctionnalité affectée à un élément d'utilisation (2, 2.1, 3, 4) vers un élément d'utilisation supplémentaire (6, 6.1) gérant les affectations, **caractérisé en ce que** la manette de jeu (1) présente, afin de paramétrer l'élément d'utilisation supplémentaire (6, 6.1), en guise de moyen d'affectation, un module de sélection de fonctions (11) avec plusieurs fonctionnalités d'éléments d'utilisation préprogrammables et avec un sélecteur de fonctions (8, 8.1) actionnable manuellement destiné à sélectionner l'une des fonctionnalités de l'élément d'utilisation préprogrammées comme étant la fonctionnalité exécutable par l'élément d'utilisation supplémentaire (6, 6.1), le sélecteur de fonctions (8, 8.1) pouvant être positionné dans différentes positions de commutation et une fonctionnalité d'élément d'utilisation différente préprogrammable étant affectée à chaque position de commutation.

2. Manette de jeu selon la revendication 1, **caractérisé en ce que** l'une des fonctionnalités d'élément d'utilisation préprogrammables est une fonctionnalité de test, lors de laquelle un actionnement de l'élément d'utilisation supplémentaire (6, 6.1) reste sans fonction.

3. Manette de jeu selon la revendication 1 ou 2, **caractérisé en ce que** le sélecteur de fonctions (8, 8.1) est conformé en commutateur coulissant.

4. Manette de jeu selon l'une des revendications 1 à 3, **caractérisé en ce que** le sélecteur de fonctions (8, 8.1) est disposé sur la face arrière de la manette de jeu (1).

5. Manette de jeu selon l'une des revendications 1 à 4, **caractérisé en ce que** le sélecteur de fonctions (8, 8.1) est positionné derrière un volet (7) qui peut être ouvert pour actionner le sélecteur de fonctions (8, 8.1).

6. Manette de jeu selon la revendication 5, **caractérisé en ce que** le volet (7) est un volet coulissant guidé dans des rails de guidage.

7. Manette de jeu selon la revendication 6, **caractérisé en ce que** le volet coulissant peut être coulissé et sorti de ses rails de guidage.

8. Manette de jeu selon l'une des revendications 1 à 7, **caractérisé en ce qu'au** moins un élément d'utilisation supplémentaire (6, 6.1) est un bouton poussoir.

9. Manette de jeu selon la revendication 8, **caractérisé en ce que** le bouton poussoir est conformé en bouton poussoir à positions multiples, par exemple en tant que bouton à bascule.

10. Manette de jeu selon l'une des revendications 1 à 9, **caractérisé en ce que** la manette de jeu (1) présente plusieurs éléments d'utilisation supplémentaires (6, 6.1) et qu'à chaque élément d'utilisation supplémentaire (6, 6.1) est affecté un module de sélection de fonctions (11) comportant un sélecteur de fonctions (8, 8.1).

11. Manette de jeu selon la revendication 10, **caractérisé en ce que** les plusieurs sélecteurs de fonctions (8, 8.1) sont identiques.

12. Manette de jeu selon la revendication 10 ou 11, **caractérisé en ce que** la manette de jeu (1) présente deux poignées (5, 5.1) dont les faces arrière sont en saillie par rapport à la face arrière de la partie de la manette de jeu (1) qui relie les deux poignées (5, 5.1) et **en ce que**, sur chaque poignée (5 ou 5.1) est disposé sur sa face arrière orientée respectivement vers l'autre poignée (5 ou 5.1), un élément d'utilisation supplémentaire (6, 6.1).

13. Manette de jeu selon la revendication 12, **caractérisé en ce que** les sélecteurs de fonctions (8, 8.1) sont disposés entre les poignées (5, 5.1) à distance l'un de l'autre, de sorte que chaque sélecteur de fonctions (6, 6.1) est disposé plus près de l'une des deux poignées (5, 5.1) que l'autre.

14. Manette de jeu selon l'une des revendications 1 à 13, **caractérisé en ce qu'au** moins certaines des fonctionnalités d'utilisation préprogrammables de l'au moins un module de sélection de fonctions (11) sont des fonctionnalités d'utilisation d'un ou de plusieurs éléments d'utilisation (3) disposés sur la face avant de la manette de jeu.

15. Manette de jeu selon l'une des revendications 1 à 14, **caractérisé en ce qu'au** moins un des éléments d'utilisation se trouvant sur la face avant de la manette de jeu est un joystick (2, 2.1) ou un élément d'utilisation avec une fonctionnalité correspondant à un joystick.

16. Manette de jeu selon l'une des revendications 1 à 15, **caractérisé en ce que** la manette de jeu comprend une interface pour importer une fonctionnalité d'utilisation à partir d'un appareil externe, en tant que fonctionnalité d'utilisation préprogrammée, laquelle fonctionnalité d'utilisation importée est stockée dans une mémoire de fonctionnalités d'utilisation d'un module de sélection de fonctions.
